# EUROPÄISCHE PATENTSCHRIFT

(11) **EP 3 485 214 B1**
(45) Veröffentlichungstag und Bekanntmachung des Hinweises auf die Patenterteilung: **07.06.2023**
(21) Anmeldenummer: 17749357.4
(22) Anmeldetag: 18.07.2017
(51) Int. Cl.: F28D 20/00

(54) **VORRICHTUNG UND SYSTEM ZUM SPEICHERN VON ENERGIE**
DEVICE AND SYSTEM FOR STORING ENERGY
DISPOSITIF ET SYSTÈME D'ACCUMULATION D'ÉNERGIE

(30) Priorität: 18.07.2016 DE 102016113194
(43) Veröffentlichungstag der Anmeldung: 22.05.2019
(73) Patentinhaber: Anja und Jan Holub GbR, 02943 Weisswasser (DE)
(72) Erfinder: HOLUB, Jan, 02943 Weisswasser (DE)
(74) Vertreter: Bittner, Thomas L.
(86) Internationale Anmeldenummer: PCT/DE2017/100594
(87) Internationale Veröffentlichungsnummer: WO 2018/014910

(56) Entgegenhaltungen:
- WO-A1-2015/007269
- DE-A1-102011 017 311
- GB-A- 826 624
- US-A- 3 596 034
- US-A1- 2010 021 284

## Beschreibung

Die Offenbarung betrifft eine Vorrichtung und ein System zum Speichern von Energie.

### Hintergrund

Es sind verschiedene Systeme zum Speichern von Energie bekannt, beispielsweise Wärmespeicher zum Speichern von thermischer Energie.

Aus dem Stand der Technik sind beispielsweise Wärmespeicher im Inneren eines Hauses bekannt, die ein großes Volumen von Wasser in einem Stahl- oder Kunststoffbehälter fassen. Der Behälter ist mit einer Wärmedämmung isoliert, die üblicherweise 20 bis 40 cm stark ist. Das Wasser in dem Wärmespeicher wird beispielsweise mittels einer Solarthermieanlage erwärmt. An dem Wärmespeicher ist eine Heizanlage angeschlossen, mittels der im Winter das Haus beheizt werden kann.

Weitere Wärmespeicher sind in den Dokumenten US 3,823,305 A, DE 37 25 163 A1, DE 10 2011 107 315 A1, US 4,520,862 A und DE 1 934 283 offenbart.

Das Dokument WO 2015 / 007 269 A1 offenbart ein System zum Speichern von Energie. Das System weist einen Wärmespeicher auf. Der Wärmespeicher umfasst einen Speicherbereich, der ein Wärmespeichermedium aufweist, und eine den Speicherbereich umgebende Außenwand. Ein Zwischenbereich zwischen dem Speicherbereich und der Außenwand ist zumindest teilweise mit einem gasförmigen Medium und einem Stützmaterial gefüllt. Der Zwischenbereich ist des Weiteren mit einer Pumpeinrichtung derart gekoppelt, dass ein Druck des gasförmigen Mediums regelbar ist.

Das Dokument DE 10 2011 017 311 A1 offenbart ein Verfahren zur Speicherung von elektrischer Energie durch Umwandlung in thermische Energie und anschließende Rückumwandlung über mechanische Energie in elektrische Energie, sowie ein Wärmespeichermedium und einen Wärmespeicher.

Das Dokument GB 826 624 A offenbart ein Wärmeaustauschmittel für Wände von Tanks mit einer gerillten Platte, um eine rohrförmige Leitung für ein fluides Medium und eine darin festgehaltene Leitung aufzunehmen.

### Zusammenfassung

Aufgabe ist es, verbesserte Technologien zum Speichern von Energie anzugeben. Insbesondere soll eine effiziente Nutzung gespeicherter Energie ermöglicht werden.

Es sind eine Vorrichtung nach dem Anspruch 1 und ein System nach dem Anspruch 10 offenbart. Weitere Ausführungsformen sind Gegenstand von abhängigen Ansprüchen.

Nach einem Aspekt ist eine Vorrichtung zum Speichern von Energie bereitgestellt. Die Vorrichtung weist einen Wärmespeicher auf. Der Wärmespeicher umfasst einen Speicherbereich, der ein Wärmespeichermedium aufweist, und eine den Speicherbereich umgebende Außenwand. Ein Zwischenbereich zwischen dem Speicherbereich und der Außenwand ist zumindest teilweise mit einem gasförmigen Medium gefüllt. Der Zwischenbereich ist des Weiteren mit einer ersten Pumpeinrichtung derart gekoppelt, dass ein Druck des gasförmigen Mediums regelbar ist. Die Vorrichtung weist weiterhin ein Wärmetransportelement auf, das zumindest teilweise mit einem Arbeitsmedium gefüllt ist, wobei das Wärmetransportelement zumindest abschnittsweise in dem Zwischenbereich angeordnet ist, zumindest abschnittsweise in dem Speicherbereich angeordnet ist und / oder zumindest abschnittsweise an einer dem Zwischenbereich zugewandten Oberfläche des Speicherbereichs angeordnet ist, und wobei ein erster Abschnitt des Wärmetransportelements in dem Zwischenbereich angeordnet ist, derart, dass das Arbeitsmedium in dem Wärmetransportelement in dem ersten Abschnitt mittels von dem Wärmespeichermedium abgegebener Wärme erwärmbar ist, und ein zweiter Abschnitt des Wärmetransportelements außerhalb der Außenwand angeordnet ist, derart, dass das Arbeitsmedium in dem zweiten Abschnitt abkühlt.

Der Zwischenbereich kann zumindest teilweise oder vollständig mit einem Stützmaterial gefüllt sein. Beispielsweise kann ein erstes Wärmetransportelement wenigstens abschnittsweise in dem Zwischenbereich angeordnet sein und ein zweites Wärmetransportelement kann wenigstens abschnittsweise in dem Speicherbereich angeordnet sein. In einer anderen Ausführungsform kann das erste Wärmetransportelement in dem Zwischenbereich angeordnet sein, das zweite Wärmetransportelement kann in dem Speicherbereich angeordnet sein und ein drittes Wärmetransportelement kann auf der Oberfläche des Speicherbereichs angeordnet sein.

Nach einem weiteren Aspekt ist ein System zum Speichern von Energie offenbart. Das System weist eine Vorrichtung zum Speichern von Energie auf. Des Weiteren weist das System einen Speicher auf, der ein Speichermedium umfasst, und der mit dem Wärmetransportelement gekoppelt ist, derart, dass von dem Wärmetransportelement abgegebene Wärme auf das Speichermedium übertragbar ist.

Der Wärmespeicher kann mit einer Einrichtung gekoppelt sein, die eine Energie in das Wärmespeichermedium einbringt, derart, dass das Wärmespeichermedium erwärmt wird. Die Erwärmung des Wärmespeichermediums kann beispielsweise mittels elektrischer Energie erfolgen. Das erwärmte Wärmespeichermedium gibt die Wärmeenergie an die Umgebung ab, beispielsweise in Form von Wärmestrahlung oder Konvektion. Die Wärmeenergie kann durch den Zwischenbereich und die Außenwand dringen und somit die Umgebung des Wärmespeichers erwärmen.

Die erste Pumpeinrichtung ermöglicht eine Regelung der Wärmeabgabe. Die Wärmeleitfähigkeit eines gasförmigen Mediums ist eng mit der mittleren freien Weglänge der Moleküle verknüpft. Die Wärmeleitfähigkeit ist bei gegebener Temperatur in einem weiten Druckbereich vom Druck und damit von der Gasdichte unabhängig. Wenn die mittlere freie Weglänge der Moleküle größer wird als der Abstand unterschiedlich temperierter Wände zwischen denen ein Wärmetransport erfolgt, wird die Wärmeleitfähigkeit druckabhängig. Wenn also der Zwischenbereich evakuiert wird, der Druck des gasförmigen Mediums also einen Schwellwert unterschreitet, nimmt die Wärmeleitfähigkeit des Mediums mit sinkendem Druck ab. Hierdurch kann der Wärmetransport von dem Wärmespeichermedium zu der Umgebung außerhalb der Außenwand nahezu vollständig unterbunden werden. Soll die Umgebung erwärmt werden, kann der Druck des gasförmigen Mediums erhöht werden, um einen Wärmetransport zu ermöglichen. Mittels der Wahl des Drucks des gasförmigen Mediums ist also der Wärmetransport von dem Wärmespeichermedium zur äußeren Umgebung regelbar.

Es ist vorgesehen, dass ein erster Abschnitt des Wärmetransportelements derart in dem Zwischenbereich angeordnet ist, dass das Arbeitsmedium in dem Wärmetransportelement in dem ersten Abschnitt mittels von dem Wärmespeichermedium abgegebenen Wärme erwärmbar ist, und ein zweiter Abschnitt des Wärmetransportelements außerhalb der Außenwand angeordnet ist, derart, dass das Arbeitsmedium in dem zweiten Abschnitt abkühlt. Diese Ausführungsform ermöglicht eine einfache Ankopplung des Speichers an das Wärmerohr.

Das Wärmetransportelement kann mit einem gasdichten Material gebildet sein.

Das Wärmetransportelement kann als Hohlkörper gebildet sein. Der Hohlkörper kann mit einer zweiten Pumpeinrichtung verbunden sein, derart, dass das Arbeitsmedium mittels der zweiten Pumpeinrichtung durch den Hohlkörper transportiert werden kann. Der Hohlkörper kann aus Edelstahl gebildet sein. Ein von dem Hohlkörper umgebener Innenraum kann vollständig mit dem Arbeitsmedium gefüllt sein. Als Arbeitsmedium kann Wasser, Alkohol, Helium oder flüssiges Natrium verwendet werden. Falls Helium als Arbeitsmedium eingesetzt wird, kann es einen Druck im Bereich von 5 bar bis 50 bar oder im Bereich von 10 bar bis 30 bar haben.

Es können mehrere Hohlkörper in dem Zwischenraum angeordnet sein. Die mehreren Hohlkörper können mit einem gleichen Abstand zueinander angeordnet sein oder mit verschiedenen Abständen.

Das Wärmetransportelement kann als Wärmerohr (Heatpipe) ausgeführt sein. Ein Wärmerohr ist eine Wärmeübertragungseinrichtung, die unter Nutzung von Verdampfungswärme eines Arbeitsmediums eine hohe Wärmestromdichte erlaubt, d. h. auf kleiner Querschnittsfläche können große Wärmemengen transportiert werden. Es ist mit dem Arbeitsmedium zumindest teilweise gefüllt. Das Arbeitsmedium füllt das Volumen in dem Wärmerohr zu einem (kleinen) Teil in flüssigem Zustand und zu einem anderen (größeren) Teil in dampfförmigem Zustand aus. Bei Wärmeeintrag beginnt das Arbeitsmedium zu verdampfen. Dadurch wird über dem Flüssigkeitsspiegel der Druck im Dampfraum lokal erhöht, was zu einem geringen Druckgefälle innerhalb des Wärmerohrs führt. Der entstandene Dampf strömt deswegen zu einer Stelle mit niedrigerer Temperatur, wo er kondensiert. An dieser Stelle erhöht sich die Temperatur durch die frei werdende Kondensationswärme. Die zuvor aufgenommene latente Wärme wird an die Umgebung abgegeben. Das nun flüssige Arbeitsmedium kehrt beispielsweise durch Schwerkraft und / oder durch Kapillarkräfte wieder zurück zu der Stelle, an der die Wärme eingeleitet wird. Die Funktionsweise des Wärmerohrs ist dem Fachmann bekannt und wird hier nicht weiter ausgeführt. Das Arbeitsmedium in dem Wärmerohr kann beispielsweise Wasser, Ammoniak, Alkohol oder Butanol sein. Das Wärmerohr kann aus einem druckbeständigen Material sein.

Die weiteren Erläuterungen zum Wärmetransportelement gelten sowohl für die Ausführung als Hohlkörper als auch als Wärmerohr.

Ein Abschnitt des Wärmetransportelements kann aus dem Wärmespeicher herausgeführt sein. Der herausgeführte Abschnitt kann an eine Wasserversorgung eines Gebäudes angeschlossen sein. Ergänzend oder alternativ kann der herausgeführte Abschnitt des Wärmetransportelements in eine Heizungsanlage eines Gebäudes eingespeist werden. Es ist ebenfalls möglich, dass der herausgeführte Abschnitt des Wärmetransportelements selbst als Heizelement verwendet wird. Der herausgeführte Abschnitt kann in einen Raum eines Gebäudes (oder an eine andere Stelle) geführt sein und dort Wärme abgeben, um die Umgebung zu erwärmen.

Mittels des Wärmetransportelements (z.B. des Wärmerohrs) kann die in dem Wärmespeichermedium gespeicherte Energie effizient genutzt werden. Beispielsweise kann im Sommer, wenn eine Heizung mittels des Wärmespeichers nicht notwendig ist, die im Wärmespeichermedium gespeicherte Energie genutzt werden, um diese mittels des Wärmetransportelements an den Speicher zu übertragen. Das Medium in dem Speicher kann beispielsweise Wasser sein, so dass hiermit eine Warmwasserversorgung bereitgestellt werden kann. Der Wirkungsgrad der Vorrichtung kann also erhöht werden.

Das Wärmetransportelement kann an einer Platte gebildet sein, wobei die Platte zumindest abschnittsweise in dem Zwischenbereich angeordnet ist und / oder zumindest abschnittsweise in dem Speicherbereich angeordnet ist und / oder zumindest abschnittsweise an der dem Zwischenbereich zugewandten Oberfläche des Speicherbereichs angeordnet ist.

Es können mehrere Wärmetransportelemente an der Platte gebildet sein, wobei die mehreren Wärmetransportelemente zumindest abschnittsweise in dem Zwischenbereich angeordnet sind und / oder zumindest abschnittsweise in dem Speicherbereich angeordnet sind und / oder zumindest abschnittsweise an der dem Zwischenbereich zugewandten Oberfläche des Speicherbereichs angeordnet sind. Die Platte mit den Wärmetransportelementen kann aus einem Metall bestehen, beispielsweise Kupfer, Stahl oder Edelstahl. Alternativ kann die Platte mit den Wärmetransporteiementen aus Graphen gebildet sein. Das Wärmetransportelement oder die Wärmetransportelemente können in die Platte integriert sein. Es kann vorgesehen sein, dass die mehreren Wärmetransportelemente einen vorbestimmten, gleichmäßigen Abstand zueinander haben oder verschiedene Abstände zueinander aufweisen. Die mehreren Wärmetransportelemente können parallel zueinander an der Platte gebildet sein. Mehrere Wärmetransportelemente können in direktem Kontakt miteinander gebildet sein. Die mehreren Wärmetransportelemente können mit dem gleichen Arbeitsmedium oder mit verschiedenen Arbeitsmedien zumindest teilweise gefüllt sein.

Das oder die Wärmetransportelemente können mit einem runden Querschnitt gebildet sein. Es kann auch vorgesehen sein, dass das Wärmetransportelement (oder mehrere Wärmetransportelemente) mit einem flachen Querschnitt gebildet sind, wobei eine Breite größer ist als eine Höhe. Alternativ kann der Querschnitt rechteckig, quadratisch oder oval sein. Ein oder mehrere Wärmetransportelemente (z.B. runde oder flache)können an der Platte gebildet sein, mit gleichem Abstand zueinander oder mit verschiedenen Abständen. Es kann auch vorgesehen sein, dass das Wärmetransportelement (oder die Wärmetransportelemente) in einem Abschnitt einen flachen Querschnitt und in einem anderen Abschnitt einen runden Querschnitt aufweisen. Der Abschnitt mit dem runden Querschnitt kann an einem Durchgang aus dem Wärmespeicher heraus gebildet sein. Des Weiteren kann vorgesehen sein, dass mehrere Wärmetransportelemente (z.B. mit flachem oder runden Querschnitt) zu einem Sammelrohr zusammengeführt werden, wobei das Sammelrohr aus dem Wärmespeicher heraus geführt ist.

Die Platte (mit dem einen oder mehreren Wärmetransportelementen) kann den Speicherbereich teilweise oder vollständig umgeben. Es kann auch vorgesehen sein, dass mehrere Platten, die jeweils mit einem oder mehreren Wärmetransportelementen gebildet sind, in dem Zwischenraum angeordnet sind. Nach einer Ausführungsform ist eine weitere Platte in dem Zwischenbereich zwischen der Platte und dem Speicherbereich angeordnet, wobei an der weiteren Platte ein oder mehrere weitere Wärmetransportelemente gebildet sind. Die weitere Platte ist also dichter an dem Speicherbereich als die Platte. Wenn die Temperatur in dem Speicherbereich unter einen bestimmten Wert fällt, kann die weitere Platte verwendet werden, um Wärmeenergie aus der Vorrichtung abzuführen. In einer Ausführungsform können an der Platte ein oder mehrere Hohlkörper angeordnet sein. An der weiteren Platte können ein oder mehrere Wärmerohre angeordnet sein. Alternativ kann vorgesehen sein, dass sowohl an der Platte als auch an der weiteren Platte jeweils ein oder mehrere Hohlkörper gebildet sein. In einer weiteren Ausführungsform können sowohl an der Platte als auch an der weiteren Platte jeweils ein oder mehrere Wärmerohre gebildet sein.

An der Platte und / oder der weiteren Platte können jeweils gleichartige Wärmetransportelemente gebildet sein, also jeweils nur Wärmerohre oder nur Hohlkörper. Es sind aber auch gemischte Anordnungen von wenigstens einem Wärmerohren und wenigstens einem Hohlkörper an derselben Platte möglich.

Es können mehrere Platten in dem Zwischenraum vorgesehen sein, wobei die mehreren Platten jeweils wenigstens ein Wärmetransportelement aufweisen. Hierdurch können mehrere Ebenen in dem Zwischenraum gebildet werden.

Der Druck des Arbeitsmediums in dem Wärmerohr kann steuerbar sein. Mit der Einstellung des Drucks im Wärmerohr kann der Wärmetransport eingestellt werden. Der Wärmetransport in dem Wärmerohr kann hierüber auch unterbunden werden. Wenn der Druck im Wärmerohr gering ist, erfolgt keine Ableitung der Wärme, so dass die Wärme des Wärmespeichermediums über die Außenwand abgegeben wird.

Es kann vorgesehen sein, dass das Wärmerohr oder die mehreren Wärmerohre und / oder das weitere oder die mehreren weiteren Wärmerohre mit einer dritten Pumpeinrichtung (welche ein oder mehrere Ventile aufweisen kann) verbunden sind, die konfiguriert ist, einen Druck in dem einen oder mehreren Wärmerohren bzw. in dem einen oder mehreren weiteren Wärmerohren einzustellen. Über die Einstellung des Drucks in den (weiteren) Wärmerohre(n) kann der Wärmetransport eingestellt werden. Die dritte Pumpeinrichtung kann eine einzelne Pumpe sein, die mittels Ventilen mit den (weiteren) Wärmerohre(n) gekoppelt ist. Alternativ kann die dritte Pumpeinrichtung mehrere Pumpen umfassen, wobei jeweils eine Pumpe (ggf. mit einem oder mehreren Ventilen) mit einem (weiteren) Wärmerohr gekoppelt ist.

Das Wärmetransportelement (z.B. als Hohlkörper oder als Wärmerohr) oder auch mehrere Wärmetransportelemente können mit einem Stirling-Generator oder einer Dampfturbine gekoppelt sein.

Der Speicher kann mit einer Hülle umgeben sein, wobei ein zwischen dem Speicher und der Hülle gebildeter Bereich zumindest teilweise mit einem weiteren gasförmigen Medium gefüllt ist, wobei der Bereich mit einer vierten Pumpeinrichtung verbunden ist, wobei eine Steuereinrichtung der vierten Pumpeinrichtung konfiguriert ist, bei Überschreiten einer vorbestimmten Temperatur des Speichermediums einen Druck in dem Bereich zu verändern, um eine Wärmeabgabe zu ermöglichen. Insbesondere kann vorgesehen sein, den Druck in dem Bereich zu erhöhen, um die Wärmeabgabe zu ermöglichen. Die vierte Pumpeinrichtung kann als separate Pumpeinrichtung ausgeführt sein. Es kann auch vorgesehen sein, dass der Bereich mittels eines Ventils (oder mehrerer Ventile) und ggf. einem Leitungselement mit der ersten Pumpeinrichtung gekoppelt ist, um den Druck in dem Bereich einzustellen. Eine (zusätzliche) vierte Pumpeinrichtung ist in diesem Fall nicht erforderlich.

Des Weiteren kann ein zweiter Speicher vorgesehen sein, der mit dem Wärmetransportelement (oder den mehreren Wärmetransportelementen) gekoppelt ist, z.B. mit dem Wärmerohr oder dem Hohlkörper (bzw. den Wärmerohren und / oder den weiteren Wärmerohren sowie den Hohlkörpern und / oder den weiteren Hohlkörpern). Der zweite Speicher kann ein zweites Speichermedium umfassen, beispielsweise Wasser. Das zweite Speichermedium kann eine relativ geringe Temperatur aufweisen, beispielsweise zwischen 0°C und 30°C. Mittels des zweiten Speichermediums können beispielsweise die (weiteren) Wärmetransportelemente gekühlt werden, so dass ein Wärmetransport unterbunden wird. Der zweite Speicher kann auf seiner Oberfläche ein oder mehrere Kühlelemente aufweisen, beispielsweise Kühlrippen. Das Wärmetransportelement (oder die Wärmetransportelemente) kann in einer Ausführungsform mit einer Wärmesenke gekoppelt sein, beispielsweise einem Bereich im Erdboden oder einem Gewässer.

In einer Ausführungsform umfasst die Vorrichtung nur den Wärmespeicher. In anderen Ausführungsformen können weitere Komponenten vorgesehen sein. Der von der Außenwand umgebende Zwischenbereich mit dem regelbaren Gas wird auch als Vakuumisolierung bezeichnet.

Das gasförmige Medium kann ein reines Gas sein, beispielsweise Wasserstoff oder Helium, oder als ein Gasgemisch vorliegen, beispielsweise Luft. Der Schwellwert, ab dem die Wärmeleitfähigkeit des gasförmigen Mediums druckabhängig wird, hängt vom konkreten Gas/Gasgemisch ab. Je schwerer ein Gasmolekül ist, desto kürzer ist die mittlere freie Weglänge.

In dem Zwischenbereich kann zumindest teilweise ein Stützmaterial angeordnet sein. Dies ermöglicht es, ein gestütztes Vakuum in dem Zwischenbereich zu erzeugen. In dem gestützten Vakuum ist die mittlere freie Weglänge der Gasmoleküle (stark) verringert. Hierdurch ist es nicht erforderlich den Druck zu sehr zu verringern, um eine hohe Wärmeisolierung zu erzielen. Das Stützmaterial kann beispielsweise als feinporiges Material und / oder als wärmedämmendes Material gebildet sein. Das Stützmaterial kann beispielsweise in Form von festen Elementen, beispielsweise einer oder mehrerer Platten, oder als rieselfähiges Schüttgut gebildet sein. Die Platte(n) kann / können beispielsweise aus Glasfasern, einem Silikat, Kieselsäure oder einer Kombination der vorgenannten Materialien bestehen. Das Schüttgut hat vorzugsweise eine gleichmäßige Dichte, eine im Wesentlichen gleiche Körnung und / oder eine gleichartige Materialzusammensetzung. Als Schüttgut können beispielsweise Mikrohohl-Glaskugeln verwendet werden. An der Außenwand kann in einem oberen Bereich eine Einlassöffnung gebildet sein, durch die das Schüttgut in den Zwischenbereich eingebracht werden kann. Des Weiteren kann in einem Bodenbereich der Außenwand eine Auslassöffnung gebildet sein, durch die das Schüttgut aus dem Zwischenbereich entfernt werden kann. Bei einem gestützten Vakuum kann die Dicke der Außenwand reduziert werden, ohne dass deren Stabilität beeinträchtigt wird. Die Außenwand kann beispielsweise aus einer 1 bis 2 mm dicken Edelstahlwand bestehen. Es kann vorgesehen sein, dass das Stützmaterial den Zwischenbereich vollständig ausfüllt. Beispielsweise können die eine oder mehrere Platten derart in dem Zwischenbereich angeordnet sein, dass dieser vollständig gefüllt ist. Das gasförmige Medium kann sich in diesem Fall beispielsweise im Wesentlichen in Poren und / oder Zwischenräumen zwischen Bestandteilen der Platten befinden. Die Wärmeisolierung mittels des gestützten Vakuums kann etwa einen Faktor 20, 30 oder 50 effektiver sein als eine Isolierung mit herkömmlichen Materialien, bei denen keine Druckverringerung stattfindet.

Das Stützmaterial wird in dem Sinne verstanden, dass beim Ausbilden eines Unterdrucks ein gestütztes Vakuum erzeugt wird. Wie bereits oben beschrieben, bedeutet dies, dass die mittlere freie Weglänge der Moleküle verkürzt wird. Zusätzlich kann das Stützmaterial ausgebildet sein, eine statisch tragende Funktion auszufüllen. Durch die Verringerung des Drucks in dem Zwischenbereich wirken Kräfte auf die Außenwand, die von der Druckdifferenz zwischen dem Außendruck und dem Druck in dem Zwischenbereich abhängig sind. Das Stützmaterial kann ausgebildet sein, diese Kräfte aufzunehmen und eine Verformung der Außenwand zu verhindern. In diesem Fall erfüllt das Stützmaterial also zwei Funktionen. Es stützt sowohl das Vakuum als auch mechanisch die Außenwand. Ein derartiges Stützmaterial kann auch als statisch tragendes Stützmaterial bezeichnet werden. Des Weiteren kann das Stützmaterial als Strahlungsschutz (gegen Wärmestrahlung) dienen.

Der Zwischenbereich kann mit wenigstens zwei verschiedenen Stützmaterialien zumindest teilweise gefüllt sein. Ein Stützmaterial kann ein statisch tragendes Stützmaterial sein. Ein anderes Stützmaterial kann ein statisch nicht tragendes Stützmaterial sein. Die Stützmaterialien können in mehreren Lagen angeordnet sein. Das statisch nicht tragende Stützmaterial kann auch als Füllmaterial oder Dämmmaterial bezeichnet werden. Das nicht tragende Stützmaterial (Dämmmaterial) kann ebenfalls als Strahlungsschutz (gegen Wärmestrahlung) dienen.

Es kann vorgesehen sein, dass das Wärmetransportelement von dem Stützmaterial umgeben ist. Ein erstes Stützmaterial kann in einem Bereich zwischen der Platte und der Außenwand angeordnet sein. Ein zweites Stützmaterial kann in einem Bereich zwischen der Platte und dem Speicherbereich angeordnet sein. Das zweite Stützmaterial kann dem ersten Stützmaterial gleich oder verschieden hiervon sein. Das Wärmetransportelement kann in das erste und / oder zweite Stützmaterial integriert sein. Des Weiteren können auch die weiteren Wärmetransportelemente von dem Stützmaterial umgeben sein.

Nach einer Ausführungsform kann der Zwischenbereich mit vier oder mehr Stützmaterialien zumindest teilweise oder vollständig gefüllt sein. Die vier Stützmaterialien können derart angeordnet sein, dass zwei Stützmaterialien direkt benachbart zu der Außenwand sind und keinen Kontakt mit dem Speicherbereich haben. Die zwei Stützmaterialien bilden eine äußere Stützschicht. Zwei andere Stützmaterialien können direkt benachbart zu dem Speicherbereich angeordnet sein und keinen Kontakt mit der Außenwand haben. Sie bilden eine innere Stützschicht. Die Wärmeübergangskoeffizienten der vier Stützmaterialien können gleich oder verschieden sein. Des Weiteren können die Wärmeübergangskoeffizienten der zwei Stützmaterialien der äußeren Schicht gleich oder verschieden sein. Schließlich können auch die Wärmeübergangskoeffizienten der zwei anderen Stützmaterialien der inneren Schicht gleich oder verschieden sein.

Es kann vorgesehen sein, dass ein Ende des statisch tragenden Stützmaterials an dem Speicherbereich anliegt und an anderes Ende des statisch tragenden Stützmaterials an der Innenseite der Außenwand anliegt. Das statisch tragende Stützmaterial erstreckt sich über die gesamte Länge des Zwischenbereichs zwischen dem Speicherbereich und der Außenwand. Es bildet also eine Stütze. Es können auch mehrere solcher Stützen in dem Zwischenbereich angeordnet sein. Der Bereich zwischen den Stützen kann zumindest teilweise mit einem Dämmmaterial gefüllt sein. Hierdurch kann die Wärmeisolierung angepasst werden. Kosten und / oder Material können eingespart werden. Direkt an dem Speicherbereich anliegend kann ein weiteres Dämmmaterial vorgesehen sein. Der Bereich zwischen den Säulen ist somit (teilweise) zweilagig gefüllt. Das weitere Dämmmaterial kann temperaturbeständig sein, also eine Schmelztemperatur oder Sublimationstemperatur von größer als 600° C, bevorzugt größer als 800° C, weiter bevorzugt größer als 1000° C aufweisen. Für den Fall, dass der Speicherbereich ein festes Wärmespeichermedium aufweist, beispielsweise einen Betonkern, kann das weitere Dämmmaterial eine Schmelztemperatur oder Sublimationstemperatur im Bereich von 1000 °C bis 1400 °C aufweisen. Mit der Wahl des weiteren Dämmmaterials ist die maximale Wärmeabgabe des Speicherbereichs einstellbar. Das weitere Dämmmaterial kann plattenförmig sein, beispielsweise eine Kieselsäure enthaltene Platte.

Die Verwendung von mehreren Lagen von Stützschichten (gleicher oder unterschiedlicher Materialien) kann folgende Vorteile haben: der maximale Wärmeübergangskoeffizient ist dimensionierbar, ein größerer Bereich des Wärmeübergangskoeffizienten ist einstellbar, dünnere Isolierstärken können eingesetzt werden, es ist eine höhere Speicherkapazität (maximale Temperatur) des Wärmespeichers möglich und das Volumen des Wärmespeichers kann reduziert werden.

Der größere Bereich des Wärmeübergangskoeffizienten ist durch das Verwenden verschiedener Materialien nebeneinander möglich (z.B. statisch tragend und statisch nicht tragend). Bei statisch nicht tragenden Materialien kann die Wärmeleitung weiter verringert werden. Es kann ein geringerer Wärmeübergangskoeffizient erzielt werden bis hin zu einer mehrlagigen Anordnung (Multilayeranordnung) bei der fast nur noch Wärmestrahlung unterbunden werden muss.

Der Wärmespeicher kann fest mit einem Boden eines Gebäudes verbunden sein. Es kann vorgesehen sein, dass der Wärmespeicher in ein Fundament des Gebäudes integriert ist. Der Wärmespeicher kann als Bodenplatte und / oder als Deckenplatte ausgeführt sein. Weiterhin kann vorgesehen sein, dass eine Bodenseite des Speicherbereichs vollständig von der Außenwand umgeben ist. An einer Bodenseite des Wärmespeichers kann eine Isolierung gebildet sein. Es kann vorgesehen sein, dass unter dem Speicherbereich innerhalb des Zwischenbereichs ein Stützmaterial angeordnet ist, beispielsweise in Form der oben genannten Platte oder mehrerer Platten. Mittels der Regulierung des Drucks des gasförmigen Mediums kann hierdurch ebenfalls eine Wärmeisolierung im Bodenbereich gewährleistet werden. Der Speicherbereich kann beispielsweise auf der Platte (bzw. den Platten) stehen. Alternativ oder ergänzend kann eine Kammer unter dem Wärmespeicher gebildet sein. Die Kammer kann eine Kammerwand aufweisen, die einen Kammerbereich umgibt. Der Kammerbereich kann zumindest teilweise mit einem weiteren gasförmigen Medium und einem weiteren Stützmaterial gefüllt sein. Der Kammerbereich kann des Weiteren mit der ersten Pumpeinrichtung oder einer fünften Pumpeinrichtung derart gekoppelt sein, dass ein Druck des weiteren gasförmigen Mediums regelbar ist. Hierdurch ist eine Wärmeabgabe in Richtung des Bodens regelbar. Für das weitere gasförmige Medium und das weitere Stützmaterial gelten die Ausführungen zu dem gasförmigen Medium und dem Stützmaterial entsprechend. Es kann insbesondere vorgesehen sein, dass das gasförmige Medium und das weitere gasförmige Medium sowie das Stützmaterial und das weitere Stützmaterial gleich sind. Weiterhin kann die Isolierung an der Bodenseite alternativ oder ergänzend eine oder mehrere Schaumglasplatten umfassen, die beispielsweise übereinander gestapelt sind.

Es kann vorgesehen sein, dass der Wärmespeicher derart in dem Gebäude angeordnet ist, dass er von allen Seiten von einer Gebäudeaußenwand des Gebäudes umgeben ist. Beispielsweise ist der Wärmespeicher im Wesentlich zentral in dem Gebäude angeordnet, um eine gleichmäßige Erwärmung des Gebäudes zu ermöglichen. Es kann vorgesehen sein, dass der Wärmespeicher in dem Gebäude frei stehend gebildet ist. Des Weiteren kann vorgesehen sein, dass der Wärmespeicher von einer Gebäudeinnenwand des Gebäudes umgeben ist, beispielsweise vollständig. Der Wärmespeicher kann in die Wandkonstruktion des Gebäudes integriert sein. Beispielsweise kann sich der Wärmespeicher über mehrere Etagen des Gebäudes erstrecken. Hierbei kann die Form des Wärmespeichers an eine Geometrie des Gebäudes angepasst sein. Der Wärmespeicher kann beispielsweise eine geschwungene Form aufweisen. Es kann vorgesehen sein, dass an der Außenwand des Wärmespeichers Wärmeleitelemente angeordnet sind, die sich in das Gebäude erstrecken, um die Wärme zu verteilen. Der Wärmespeicher kann auch in einen Fußboden und / oder eine Decke integriert sein.

Es kann vorgesehen sein, dass ein Teil des Wärmespeichers außerhalb eines Gebäudes angeordnet ist oder sich unterhalb des Gebäudes befindet, beispielsweise im Keller. Durch die Verwendung verschiedener Stützmaterialien kann im äußeren Teil die maximale Wärmeisolierung durch eine besonders geringe mittlere freie Weglänge des Stützmaterials gehalten werden und gleichfalls im Inneren des Gebäudes die Wärmeabgabe geregelt werden. Alternativ kann die Vorrichtung mit dem Wärmespeicher vollständig außerhalb eines Gebäudes angeordnet sein. Der Wärmespeicher kann außerhalb des Gebäudes in der Erde vergraben sein. Der Speicher, mit welchem der Wärmespeicher gekoppelt sein kann, kann in dem Gebäude angeordnet sein.

Nach einer weiteren Ausführungsform kann das Gebäude mit einer Vakuumisolierung gebildet sein. Die Vakuumisolierung kann die Außenwände und / oder einen Fußboden umfassen (z.B. für einen Keller). Die Vakuumisolierung kann mit der ersten Pumpeinrichtung gekoppelt sein, so dass die Wärmeübertragung regelbar ist. Die Vakuumisolierung führt zu einer guten Wärmeisolierung des Gebäudes und ist regelbar. Des Weiteren ist die Vakuumisolierung um einiges dünner als konventionelle Wärmedämmsysteme. Sie ist weiterhin einfach zu montieren. Darüber hinaus ermöglicht sie den Einsatz von kleineren Wärmespeichern in dem Gebäude. Für die Vakuumisolierung des Gebäudes gelten die Ausführungen zur Vakuumisolierung des Wärmespeichers analog. Mittels einer Druckmesseinrichtung kann der Druck der Vakuumisolierung überwacht werden, um einen Defekt der Vakuumisolierung zu erfassen.

Der Wärmespeicher kann frei von Anschlüssen zu einer Heizungsanlage des Gebäudes sein. Des Weiteren kann das Gebäude selbst frei von einer Heizungsanlage sein. Es kann vorgesehen sein, eine Heizung des Gebäudes ausschließlich mittels des Wärmespeichers zu realisieren. Vorteilhaft hierfür ist es, wenn die Gebäudeaußenwand mit einer starken (guten) Wärmeisolierung gebildet ist. Ergänzend kann vorgesehen sein, mehrere Wärmspeicher in dem Gebäude zu installieren. Hierbei kann vorgesehen sein, dass jeder der mehreren Wärmetauscher jeweils mit einer Pumpeinrichtung gebildet ist. Alternativ kann eine gemeinsame Pumpeinrichtung vorgesehen sein, die an die mehreren Wärmespeicher gekoppelt ist. Nach einer Ausführungsform kann der Wärmespeicher konfiguriert sein, die in dem Wärmespeichermedium gespeicherte Wärme im Wesentlichen über die gesamte Fläche der Außenwand abzugeben. Die Abgabe der Wärme erfolgt beispielsweise im Wesentlichen gleichmäßig über die gesamte Fläche der Außenwand verteilt. Gemäß einer alternativen Ausführungsform können in dem Zwischenbereich mehrere Zonen gebildet sein, derart, dass eine Abgabe der in dem Wärmespeichermedium gespeicherten Wärme unterschiedlich stark über die Außenwand erfolgt. Die unterschiedlichen Zonen können beispielsweise durch unterschiedliche Stärken des Stützmaterials, insbesondere der Platten, und / oder unterschiedliche Materialien gebildet sein. Des Weiteren kann der Zwischenbereich mittels mehrerer Zwischenwände in mehrere voneinander abgeschlossene Teilzwischenbereiche unterteilt sein. Der Druck in den Teilzwischenbereichen kann unabhängig voneinander regelbar sein, beispielsweise mittels einer oder mehrerer an die Teilbereiche gekoppelten Pumpeinrichtungen (die jeweils ein oder mehrere Ventile aufweisen können), sodass hierdurch die Wärmeabgabe gesteuert werden kann.

Die Außenwand des Wärmespeichers kann aus einem Metall oder einer Metalllegierung, insbesondere Edelstahl, aus einem Glas oder aus einem Kunststoff bestehen. Die Außenwand kann einteilig oder mehrteilig gebildet sein. Es können Dehnungselemente zwischen den Elementen der Außenwand gebildet sein, die eine Ausdehnung des Wärmeträgermediums bei einer Erwärmung aufnehmen. Die Außenwand kann beispielsweise eine gewellte Form aufweisen. Die Außenwand kann aus einer Folie gebildet sein, beispielsweise einer Metallfolie. Die Außenwand kann auf einer Innenseite frei von einer Verspiegelung sein.

An die erste Pumpeinrichtung kann ein Gastank gekoppelt sein, der das gasförmige Medium beim Abpumpen (also Verringern des Drucks) aufnimmt. Wenn der Druck später erhöht werden soll, kann das in dem Gastank gespeicherte gasförmige Medium wieder in den Zwischenbereich abgelassen werden.

Die erste Pumpeinrichtung kann als Vakuumpumpe ausgeführt sein, beispielsweise eine Verdrängerpumpe, eine Molekularpumpe oder eine Turbomolekularpumpe.

Der Wärmespeicher kann als Langzeitwärmespeicher ausgeführt sein. Ein Langzeitwärmespeicher ist konfiguriert, in der warmen Jahreszeit, beispielsweise bei starker Sonneneinstrahlung, Wärme zu speichern und mit der gespeicherten Wärme ein (gut isoliertes) Gebäude in der kalten Jahreszeit zu heizen.

Es kann vorgesehen sein, dass an einer Außenseite der Außenwand ein Kühlelement angeordnet ist, beispielsweise eine Kühlleitung. Es kann vorsehen sein, dass ein oder mehrere zusätzliche Wärmerohre als Kühlelement an der Außenwand angeordnet sind. Das Kühlelement kann mit einer Wärmesenke gekoppelt sein, beispielsweise dem zweiten Speicher. Hiermit kann die Außenwand gegebenenfalls gekühlt werden, falls die Wärmeabgabe aus dem Speicherbereich unerwünscht hoch sein sollte. Es können auch mehrere Kühlelemente vorgesehen sein. Gegebenenfalls kann mit dem Kühlelement eine Kühlung eines Gebäudes durchgeführt werden. Es kann vorgesehen sein, dass das Kühlelement mit einer Kaltwasserleitung eines Gebäudes oder einem Regenwassertank außerhalb des Gebäudes gekoppelt ist.

Nach einer weiteren Ausführungsform kann vorgesehen sein, dass innerhalb der Außenwand eine Wärmetauschereinrichtung angeordnet ist, die mit dem Speicherbereich gekoppelt ist, derart, dass ein Wärmetauschermedium der Wärmetauschereinrichtung von dem Wärmespeichermedium Wärme aufnimmt, und wobei die Wärmetauschereinrichtung ein die Außenwand durchstoßendes Leitungselement aufweist, mittels dem das erwärmte Wärmetauschermedium in einen Bereich außerhalb der Außenwand transportiert werden kann. Der Wärmeaustausch zwischen dem Wärmetauschermedium und dem Wärmespeichermedium kann ebenfalls mittels eines regelbaren Vakuums erfolgen. Es kann vorgesehen sein, dass zwischen dem Wärmespeichermedium und dem Wärmetauschermedium ein weiterer Zwischenbereich gebildet ist, der mit einem weiteren gasförmigen Medium gefüllt ist. Der weitere Zwischenbereich kann an die erste Pumpeinrichtung des Wärmespeichers gekoppelt sein. Alternativ kann eine sechste Pumpeinrichtung an den weiteren Zwischenbereich gekoppelt sein. Mittels der Regelung des Drucks des weiteren gasförmigen Mediums in dem weiteren Zwischenbereich ist die Wärmeabgabe vom Wärmespeichermedium zu dem Wärmetauschermedium regelbar. Das weitere gasförmige Medium kann mit dem gasförmigen Medium des Wärmespeichers identisch sein. Alternativ kann das weitere gasförmige Medium von dem gasförmigen Medium verschieden sein. Das weitere gasförmige Medium kann ein reines Gas sein oder als ein Gasgemisch vorliegen, beispielsweise Luft. Mit dem Wärmetauscher kann beispielsweise warmes Trinkwasser bereitgestellt werden. Es können mehrere Wärmetauschereinrichtungen innerhalb der Außenwand angeordnet sein. Die mehreren Wärmetauschereinrichtungen können mit einer gemeinsamen Pumpeinrichtung oder jeweils mit einer separaten Pumpeinrichtung gekoppelt sein.

Die Vorrichtung kann weiterhin einen Warmwasserspeicher aufweisen, der mit dem Wärmespeicher gekoppelt ist, derart, dass Wärme aus dem Wärmespeicher zu dem Warmwasserspeicher abgegeben wird, um Wasser in dem Warmwasserspeicher zu erwärmen. Der Warmwasserspeicher kann mit einer Vakuumisolierung gebildet sein. Hierdurch wird eine Überhitzung des Warmwasserspeichers vermieden. Für die Vakuumisolierung des Warmwasserspeichers gelten die Ausführungen zu der Vakuumisolierung des Wärmespeichers analog,

In einer anderen Weiterbildung kann die Vorrichtung weiterhin einen Generator zum Erzeugen elektrischer Energie aufweisen, der mit dem Wärmespeicher gekoppelt ist, sodass der Generator mit Wärme aus dem Wärmespeicher betreibbar ist. Der Generator kann beispielsweise mit einer Dampfturbine oder mit einem Stirling-Motor gekoppelt sein. Eine Dampfturbine besteht aus einer schnell rotierenden Welle, bestückt mit vielen Turbinenschaufeln, die von Wasserdampf angeströmt werden. Der Wasserdampf kann mit der Wärme aus dem Wärmespeicher erhitzt werden. Der Stirling-Motor ist eine Wärmekraftmaschine, in der ein Arbeitsgas wie Luft, Helium oder Wasserstoff in einem abgeschlossenen Volumen von außen in einem Bereich erhitzt und in einem anderen gekühlt wird, um mechanische Arbeit zu leisten. Das Erhitzen kann wiederum mittels der Wärme aus dem Wärmespeicher erfolgen. Somit kann elektrische Energie preiswerter als in chemischen Batterien gespeichert werden. Der Stirling-Motor kann mittels der ersten Pumpeinrichtung mit dem Wärmespeicher gekoppelt werden.

Es kann vorgesehen sein, dass der Speicherbereich ein festes Wärmespeichermedium aufweist. Der Speicherbereich wird in diesem Fall durch einen festen Speicherkern gebildet. Ein Festkörper als Wärmespeichermedium kann auf sehr hohe Temperaturen von beispielsweise mehreren hundert Grad Celsius erwärmt werden. Hierdurch kann auf verhältnismäßig kleinem Raum eine große Wärmemenge gespeichert werden. Als festes Wärmespeichermedium können beispielsweise Basaltsplitt, Beton, Speckstein, Schamotte oder Stahl eingesetzt werden. Es kann vorgesehen sein, dass in dem festen Wärmespeichermedium eine oder mehrere Wärmetauschereinrichtungen angeordnet sind. Die eine oder mehrere Wärmetauschereinrichtung kann mittels eines hitzebeständigen Materials von dem festen Wärmespeichermedium getrennt sein. Es kann vorgesehen sein, dass ein Bereich des festen Wärmespeichermediums mit einer Schüttung gebildet ist. Beispielsweise kann ein Loch in dem Wärmespeichermedium gebildet sein, dass zumindest teilweise oder vollständig mit einem Schüttmaterial gefüllt ist. In der Schüttung kann ein Wärmetransportelement angeordnet sein. Es können auch mehrere Wärmetransportelemente in der Schüttung angeordnet sein. Dies kann eine Wartung erleichtern, z.B. einen Austausch des einen oder der mehreren Wärmetransportelemente.

Bei Verwendung eines festen Wärmespeichermediums kann vorgesehen sein, dass der Wärmespeicher zur Begrenzung ausschließlich die Außenwand aufweist und frei von Innenwänden und weiteren Außenwänden ist.

Des Weiteren kann vorgesehen sein, dass das feste Wärmespeichermedium evakuiert ist. Im Allgemeinen enthalten Festkörper aufgrund ihrer Herstellung, ihrer Be- und Verarbeitung und ihrer Lagerung nicht nur auf ihrer Oberfläche sondern auch in ihrem Inneren Gasmoleküle. Die Moleküle können im Kristallgitter gelöst, an Korngrenzen angelagert oder in Hohlräumen eingeschlossen sein. Wenn die Umgebung des Festkörpers evakuiert wird, gelangen die Gasmoleküle zur Oberfläche des Festkörpers (Diffusion) und von dort in den evakuierten Bereich (Desorption). Dieser Prozess wird auch als Gasabgabe bezeichnet. Die Gasabgabe beeinflusst die Erzeugung und Aufrechterhaltung eines Vakuums. Es kann nun vorgesehen sein, dass in dem Zwischenbereich des Wärmespeichers ein Vakuum gebildet ist, derart, dass das feste Wärmespeichermedium selbst evakuiert ist, also keine oder nur wenige Gasmoleküle aufweist.

Es kann weiterhin vorgesehen sein, dass der Speicherbereich mit einer Photovoltaikeinrichtung gekoppelt ist, mittels der das Wärmespeichermedium erwärmt werden kann. Eine Photovoltaikeinrichtung wandelt Lichtenergie in elektrische Energie um. Beispielsweise kann Sonnenlicht mittels einer Solarzelle in elektrische Energie umgewandelt werden. Die elektrische Energie kann zum Erwärmen des Wärmespeichermediums eingesetzt werden. Es kann beispielsweise vorgesehen sein, dass auf einem Dach des Gebäudes eine Photovoltaikaniage installiert ist, die mit dem Wärmespeicher gekoppelt ist. Es kann vorgesehen sein, dass die Photovoltaikeinrichtung mit einem geringfügig dimensionierten Wechselrichter gebildet ist. Alternativ kann die Photovoltaikeinrichtung frei von einem Wechselrichter gebildet sein. in beiden Fällen kann das Wärmespeichermedium auch mit Gleichstrom erwärmt werden.

Nach einer anderen Weiterbildung kann vorgesehen sein, dass der Speicherbereich ein von einer Innenwand umgebenes Wärmespeicherfluid aufweist. Der Wärmespeicher ist in diesem Fall doppelwandig ausgeführt. Zwischen der Innenwand und der Außenwand ist der Zwischenbereich gebildet, der zumindest teilweise mit dem gasförmigen Medium und dem Stützmaterial gefüllt ist. Das Wärmespeicherfluid kann beispielsweise Wasser sein. Durch seine hohe spezifische Wärmekapazität und seine relativ niedrige Viskosität stellt Wasser als Wärmespeichermedium akzeptable Anforderungen an die Technik. Insbesondere macht es das Einbringen wie auch das Austragen der gespeicherten thermischen Energie gleichermaßen einfach. Es kann vorgesehen sein, dass der Wärmespeicher mit einem Überdruckventil gebildet ist. Die Innenwand kann beispielsweise aus Edelstahl gebildet sein.

Der Speicherbereich kann mit einer Solarthermieeinrichtung gekoppelt sein, mittels der das Wärmespeichermedium erwärmt werden kann. Die Solarthermieeinrichtung wandelt Sonnenlicht in thermische Energie um. Es kann beispielsweise vorgesehen sein, dass auf einem Dach des Gebäudes eine Solarthermieanlage installiert ist, die mit dem Wärmespeicher gekoppelt ist.

Alternativ oder ergänzend kann der Speicherbereich mit einem oder mehreren Parabolkollektoren gekoppelt sein. Die Parabolkollektoren bündeln das Sonnenlicht, ähnlich wie in einem solarthermischen Kraftwerk, und erhitzen ein Wärmeträgermedium, beispielsweise Wasser oder flüssiges Natrium.

Der Speicherbereich kann mit Vorrichtung Anlage zur Verwertung von erneuerbaren Energieträgern (z.B. Bioenergie, Geothermie, Wasserkraft, Meeresenergie, Sonnenenergie und Windenergie) gekoppelt sein. Die Vorrichtung kann eingerichtet sein, die erneuerbaren Energieträger in sekundäre Energieträger (z.B. Elektrizität, Wärme) umzuwandeln. Die sekundären Energieträger können verwendet werden, um das Wärmespeichermedium zu erwärmen.

Des Weiteren kann vorgesehen sein, dass das Wärmespeichermedium ein Paraffin ist. In diesem Fall kann das Paraffin gegebenenfalls von einer Innenwand umgeben sein. Der Speicherbereich kann mit einer Solarthermieeinrichtung oder einer Photovoltaikeinrichtung gekoppelt sein, um das Paraffin zu erwärmen.

Es kann vorgesehen sein, dass im Speicherbereich ein festes und ein flüssiges Wärmespeichermedium angeordnet sind.

Es kann auch vorgesehen sein, dass der Speicherbereich mit einer Photothermieeinrichtung gekoppelt ist. Die Photothermieeinrichtung vereint die Effekte der Photovoltaik und der Solarthermie. Hiermit kann sowohl ein festes als auch ein fluides Wärmespeichermedium oder eine Kombination von beidem erwärmt werden. Des Weiteren kann der Speicherbereich mit einem Ofen gekoppelt sein, beispielsweise einem Holzvergaserofen.

Es kann vorgesehen sein, dass eine Solaranlage, beispielsweise eine Photovoltaikeinrichtung, eine Solarthermieeinrichtung und / oder eine Photothermieeinrichtung, oder eine andere Heizeinrichtung (z.B. Holzvergaserofen) mit einer Wärmepumpe gekoppelt sind. Die Wärmepumpe ist beispielsweise außerhalb des Gebäudes angeordnet. Die von der Solaranlage oder der Heizeinrichtung zugeführte Energie wird erhöht, beispielsweise unter Abkühlung der Umgebung, und die erhöhte Wärmeenergie wird dem Speicherbereich zugeführt, um das Wärmespeichermedium zu erwärmen.

Das System kann eine Vorrichtung nach einer beliebigen in der Beschreibung offenbarten Ausführungsform aufweisen.

### Beschreibung beispielhafter Ausführungsformen

Weitere Ausführungsformen werden im Folgenden unter Bezugnahme auf Figuren einer Zeichnung näher erläutert. Hierbei zeigen:
- Fig. 1: eine schematische Darstellung eines Wärmespeichers mit einem festen Wärmespeichermedium,
- Fig. 2: eine schematische Darstellung eines weiteren Wärmespeichers mit einem festen Wärmespeichermedium,
- Fig. 3: eine schematische Darstellung eines doppelwandigen Wärmespeichers mit einem flüssigen Wärmespeichermedium,
- Fig. 4: eine schematische Darstellung eines weiteren doppelwandigen Wärmespeichers mit einem flüssigen Wärmespeichermedium,
- Fig. 5 bis 7: Ausschnitte des Zwischenbereichs,
- Fig. 8: eine Ausführungsform einer Platte mit Wärmetransportelementen,
- Fig. 9: eine schematische Darstellung einer Platte in einem Zwischenbereich eines Wärmespeichers,
- Fig. 10: eine schematische Darstellung von zwei Platten in einem Zwischenbereich eines Wärmespeichers,
- Fig. 11: eine schematische Darstellung eines Systems und
- Fig. 12: eine schematische Darstellung eines Ausschnitts eines Wärmespeichers mit einem Hohlkörper.

Im Folgenden werden für gleiche Komponenten gleiche Bezugszeichen verwendet.

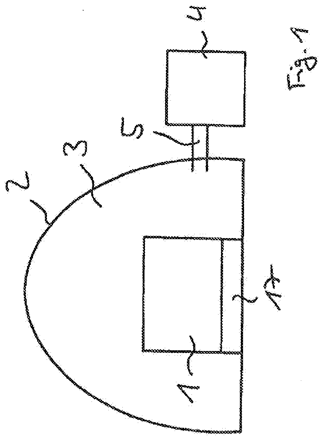

Fig. 1 zeigt einen Wärmespeicher mit einem Speicherbereich, der ein festes Wärmespeichermedium 1 aufweist. Das Wärmespeichermedium 1 ist von einer Außenwand 2 umgeben. Zwischen dem Wärmespeichermedium 1 und der Außenwand 2 ist ein Zwischenbereich 3 gebildet. Der Zwischenbereich 3 ist mit einem gasförmigen Medium gefüllt, beispielsweise Luft. Des Weiteren ist der Zwischenbereich 3 zumindest teilweise mit einem Stützmaterial gefüllt (nicht dargestellt). Eine Vakuumpumpe 4 ist mittels einer Leitung 5 mit dem Zwischenbereich gekoppelt. Mittels der Vakuumpumpe 4 ist der Druck des gasförmigen Mediums in dem Zwischenbereich 3 regelbar. Hierdurch kann die Wärmeabgabe vom Wärmespeichermedium 1 an eine äußere Umgebung reguliert werden. Unter dem festen Wärmespeichermedium 1 ist eine Platte 17 aus einem Stützmaterial angeordnet, um eine Wärmeisolierung im Bodenbereich zu ermöglichen.

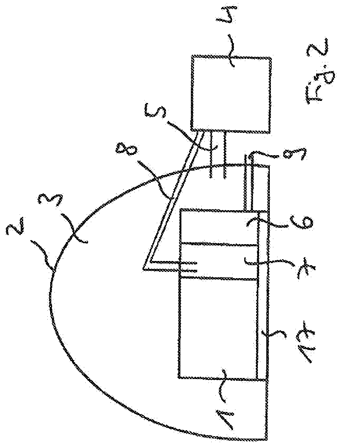

In Fig. 2 ist ein weiterer Wärmespeicher dargestellt, für den die oben gemachten Ausführungen entsprechend gelten. Innerhalb der Außenwand 2 ist ein Wärmetauscher 6 angeordnet, der ein Wärmetauschermedium aufweist, Zwischen dem festen Wärmespeichermedium 1 und dem Wärmetauscher 6 ist ein weiterer Zwischenbereich 7 gebildet, er mit einem weiteren gasförmigen Medium gefüllt ist. Die Vakuumpumpe 4 ist mittels einer weiteren Leitung 8 mit dem Zwischenbereich 7 gekoppelt. Mittels der Vakuumpumpe 4 ist der Druck in dem weiteren Zwischenbereich 7 regelbar, wodurch der Wärmeaustausch zwischen dem Wärmespeichermedium 1 und dem Wärmetauschermedium in dem Wärmetauscher 6 reguliert wird. Von dem Wärmetauscher 6 führt eine Wärmeleitung 9 aus dem Wärmespeicher heraus, mit der das erwärmte Wärmetauschermedium an die Umgebung transportiert wird. Das erwärmte Wärmetauschermedium kann beispielsweise in einen Trinkwasserkreislauf des Gebäudes eingespeist werden (nicht dargestellt). Unter dem festen Wärmespeichermedium 1, dem Wärmetauscher 6 und dem Zwischenbereich 7 ist eine Platte 17 aus einem Stützmaterial angeordnet.

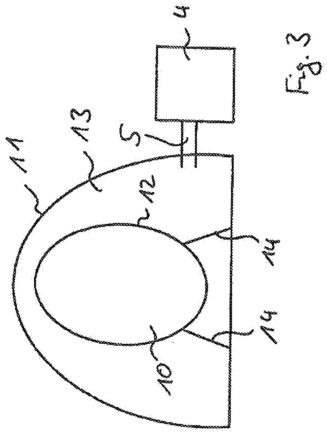

Fig. 3 zeigt einen doppelwandigen Wärmespeicher mit einer Außenwand 11 und einer Innenwand 12. Die Innenwand 12 umgibt einen Speicherbereich 10, der ein flüssiges Wärmespeichermedium aufweist, beispielsweise Wasser. Zwischen der Innenwand 12 und der Außenwand 11 ist ein Zwischenbereich 13 gebildet, der zumindest teilweise mit einem gasförmigen Medium und einem Stützmaterial gefüllt ist. Die Vakuumpumpe 4 ist mittels der Leitung 5 an den Zwischenbereich 13 gekoppelt. Die Innenwand 12 ist mittels zweier Stützelemente 14 auf dem Boden abgestützt. Alternativ kann die Innenwand 12 auf einer oder mehrerer Platten aus einem Stützmaterial abgestützt sein, ohne die Verwendung der Stützelemente 14 (nicht dargestellt).

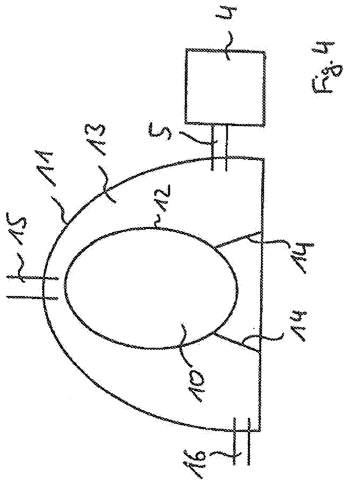

In Fig. 4 ist ein weiterer doppelwandiger Wärmespeicher dargestellt. An einem oberen Ende ist eine Einlassöffnung 15 für ein feinporiges Schüttgut gebildet. Mit dem Schüttgut kann ein gestütztes Vakuum in dem Zwischenbereich 13 gebildet werden. Mittels im unteren Bereich der Außenwand 11 gebildeten Auslassöffnung 16 kann das Schüttgut aus dem Zwischenbereich 13 entfernt werden. Auch bei dieser Ausführungsform kann auf die Verwendung der Stützelemente 14 verzichtet werden.

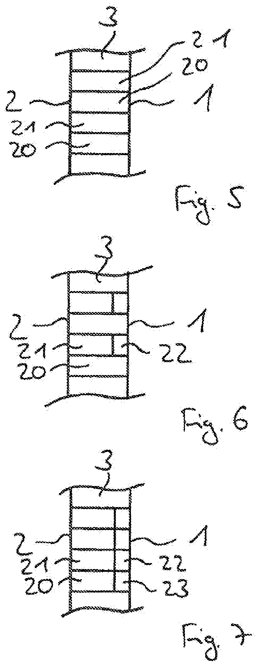

Fig. 5 bis 7 zeigen Ausschnitte des Zwischenbereichs 3 zwischen dem festen Speicherkern 1 und der Außenwand 2. in dem Zwischenbereich 3 sind verschiedene Stützmaterialien angeordnet.

In Fig. 5 sind in dem Zwischenbereich 3 abwechselnd ein statisch tragendes Stützmaterial (Stütze) 20 und ein statisch nicht tragendes Stützmaterial (Dämmmaterial) 21 angeordnet. Als Dämmmaterial kann beispielsweise Glaswolle eingesetzt werden.

Bei der in Fig. 6 gezeigten Ausführungsform sind zwischen den Stützen 20 das Dämmmaterial 21 und ein weiteres Dämmmaterial 22 angeordnet. Das weitere Dämmmaterial 22 liegt (direkt) an dem festen Speicherkern 1 an. Es ist hochtemperaturbeständig, beispielsweise eine Kieselsäureplatte,

Fig. 7 zeigt eine weitere Variante, wobei die Stützen 20 auf einem weiteren statisch tragenden Stützmaterial 23 aufliegen.

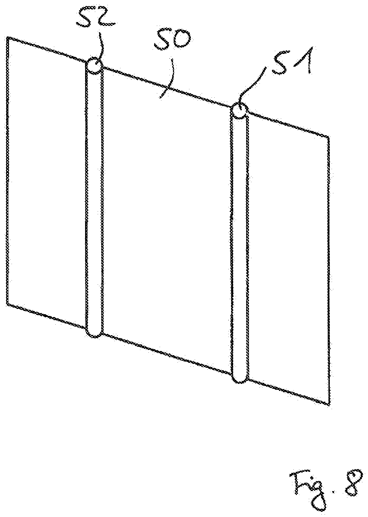

Fig. 8 zeigt eine schematische Darstellung eines Ausschnitts einer Platte 50 mit einem ersten Wärmetransportelement 51 und einem zweiten Wärmetransportelement 52. In dem gezeigten Ausschnitt sind zwei Wärmetransportelemente 51, 52 an der Platte 50 gebildet. Es kann eine beliebige Anzahl von Wärmetransportelementen vorgesehen sein. Die Wärmetransportelemente 51, 52 können parallel zueinander verlaufen. Die Wärmetransportelemente 51, 52 sind zumindest teilweise mit einem Arbeitsmedium gefüllt, beispielsweise Wasser, Helium oder Ammoniak, Beide Wärmetransportelemente 51, 52 können mit dem gleichen Arbeitsmedium gefüllt sein. Es können auch verschiedene Arbeitsmedien in den beiden Wärmetransportelementen 51, 52 vorgesehen sein. Die Wärmetransportelemente 51, 52 können als Wärmerohre und / oder als Hohlkörper ausgeführt sein.

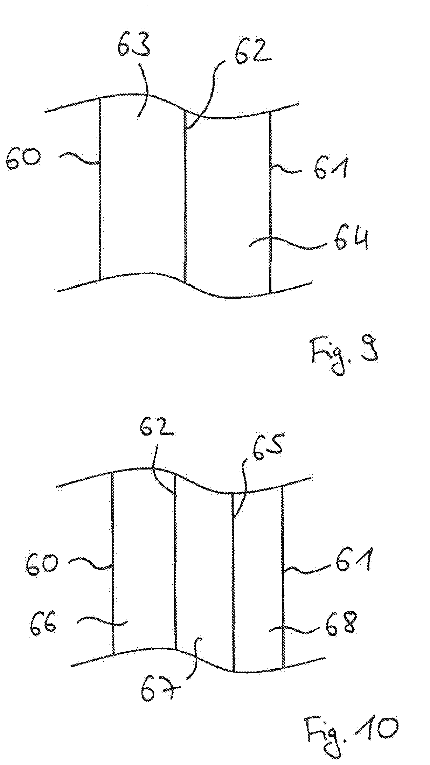

In den Fig, 9 und 10 ist schematisch dargestellt, wie eine Platte 62 mit einem oder mehreren Wärmerohren (Fig. 9) bzw. zwei Platten 62, 65 jeweils mit einem oder mehreren Wärmerohren (Fig. 10) zwischen einer Außenwand 60 und einer Wärmespeichermediumgrenze 61 eines Wärmespeichers angeordnet sind. Wenn ein festes Wärmespeichermedium verwendet wird, entspricht die Wärmespeichermediumgrenze 61 der äußeren Fläche des festen Wärmespeichermediums. Falls ein flüssiges Wärmespeichermedium eingesetzt wird, ist die Wärmespeichermediumgrenze 61 eine Innenwand, die das flüssige Wärmespeichermedium umgibt. Die Platten 62, 65 können beispielsweise in den Wärmespeichern eingesetzt werden, die in den Figuren 1 bis 4 gezeigt sind.

Bei der in Fig. 9 dargestellten Ausführungsform ist ein erster Zwischenbereich 63 zwischen der Außenwand 60 und der Platte 62 gebildet. Zwischen der Platte 62 und der Wärmespeichermediumgrenze 61 ist ein zweiter Zwischenbereich 64 gebildet. Der erste Zwischenbereich 63 und / oder der zweite Zwischenbereich 64 können teilweise oder vollständig mit einem Stützmaterial gefüllt sein. Der erste Zwischenbereich 63 kann mit dem gleichen Stützmaterial gefüllt sein wie der zweite Zwischenbereich 64. Es kann auch vorgesehen sein, dass der erste Zwischenbereich 63 mit einem anderen Stützmaterial gefüllt ist als der zweite Zwischenbereich 64. Für das Stützmaterial gelten die obigen Ausführungen, es kann insbesondere nach den in den Figuren 5 bis 7 dargestellten Ausführungsformen gebildet sein.

Die in Fig. 10 gezeigte Ausführungsform weist einen ersten Zwischenbereich 66 zwischen der Außenwand 60 und der ersten Platte 62, einen zweiten Zwischenbereich 67 zwischen der ersten Platte 62 und der zweiten Platte 65 sowie einen dritten Zwischenbereich 68 zwischen der zweiten Platte 65 und der Wärmespeichermediumgrenze 61 auf. Auch der erste Zwischenbereich 66, der zweite Zwischenbereich 67 und / oder der dritte Zwischenbereich 68 können teilweise oder vollständig mit einem Stützmaterial gefüllt sein. Die drei Zwischenbereiche 66, 67, 68 können mit dem gleichen oder mit verschiedenen Stützmaterialien gefüllt sein. Auch hier gelten für das Stützmaterial die obigen Ausführungen, es kann insbesondere nach den in den Figuren 5 bis 7 dargestellten Ausführungsformen gebildet sein.

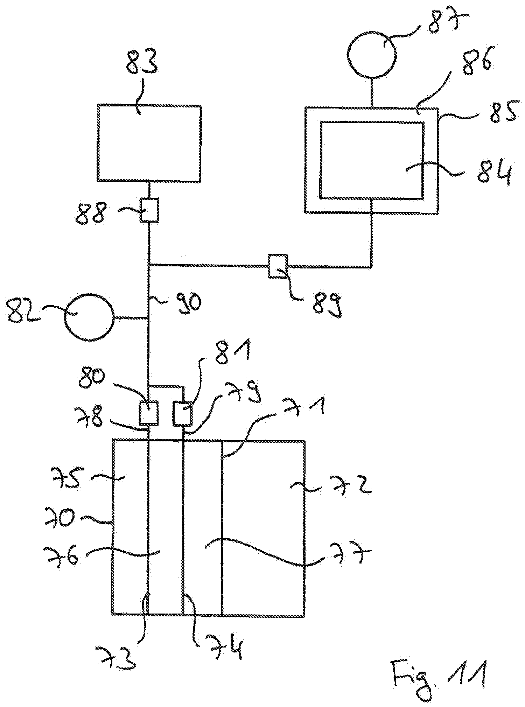

Fig. 11 zeigt ein System mit einem Wärmespeicher, einem Kaltwasserspeicher 83 und einem Warmwasserspeicher 84. Der Wärmespeicher ist abschnittsweise dargestellt. Er umfasst eine Außenwand 70 und eine Wärmespeichermediumgrenze 71. Wenn ein festes Wärmespeichermedium 72 verwendet wird, entspricht die Wärmespeichermediumgrenze 71 der äußeren Fläche des festen Wärmespeichermediums. Falls ein flüssiges Wärmespeichermedium 72 eingesetzt wird, umgibt die Wärmespeichermediumgrenze 71 als Innenwand das flüssige Wärmespeichermedium, In dem Bereich zwischen der Außenwand 70 und der Wärmespeichermediumgrenze 71 ist ein Gas eingefüllt, dessen Druck mittels einer Pumpeinrichtung regulierbar ist (nicht dargestellt). Der Wärmespeicher kann entsprechend den in den Figuren 1 bis 4 dargestellten Ausführungsformen gebildet sein.

In dem Bereich zwischen der Außenwand 70 und der Wärmespeichermediumgrenze 71 sind eine erste Platte 73 und eine zweite Platte 74 angeordnet. Die erste Platte 73 und die zweite Platte 74 sind jeweils mit einem oder mehreren Wärmerohren gebildet. Es können auch eine einzelne Platte oder mehr als zwei Platten in dem Bereich angeordnet sein. Zwischen der ersten Platte 73 und der Außenwand 70 ist ein erster Zwischenbereich 75 gebildet. Zwischen der ersten Platte 73 und der zweiten Platte 74 ist ein zweiter Zwischenbereich 76 gebildet. Zwischen der zweiten Platte 74 und der Wärmespeichermediumgrenze 71 ist ein dritter Zwischenbereich 77 gebildet. Die Zwischenbereiche 75, 76, 77 können mit einem Stützmaterial gefüllt sein, wie beispielsweise in Verbindung mit Fig. 10 beschrieben ist.

Der Wärmespeicher ist mit dem Kaltwasserspeicher 83 und dem Warmwasserspeicher 84 mittels Rohrleitungen verbunden. Der Kaltwasserspeicher 83 kann auch als Wärmesenke bereitgestellt sein, welche z.B. in der Erde vergraben ist. Die Wärmerohre der ersten Platte 73 sind mit einer ersten Rohrleitung 78 gekoppelt. Die Wärmerohre der zweiten Platte 74 sind mit einer zweiten Rohrleitung 79 gekoppelt. Die erste und zweite Rohrleitung 78, 79 führen in eine gemeinsame Rohrleitung 90. An der ersten Rohrleitung 78 ist ein erstes Ventil 80 gebildet. Analog ist an der zweiten Rohrleitung 79 ein zweites Ventil 81 gebildet. Mittels einer Pumpe 82 kann der Druck in den Wärmerohren der ersten und / oder zweiten Platte 73, 74 eingestellt werden. Hierdurch kann der Wärmetransport der Wärmerohre bestimmt werden. Die Ventile 80, 81 ermöglichen die Steuerung eines Zugriffs auf die angeschlossenen Wärmerohre.

Dem Kaltwasserspeicher 83 ist ein drittes Ventil 88 vorgelagert. Ein viertes Ventil 89 ist dem Warmwasserspeicher 84 vorgeschaltet.

in dem Kaltwasserspeicher ist Wasser mit einer geringen Temperatur (z.B. Umgebungstemperatur, beispielsweise zwischen 15° C und 25°C) gespeichert. Mit dem kalten Wasser können die Wärmerohre in der ersten Platte 73 und / oder der zweiten Platte 74 gekühlt werden, um einen Wärmetransport zu unterbinden.

In dem Warmwasserspeicher ist ebenfalls Wasser gespeichert. Aus dem Wärmespeicher kann mittels der Wärmerohre Wärmeenergie entnommen werden. Hiermit kann das Wasser in dem Warmwasserspeicher erwärmt werden, beispielsweise auf eine Temperatur von 50 °C oder 70 °C. Somit kann in dem Wärmespeicher gespeicherte Energie, die nicht zum Beheizen eines Gebäudes benötigt wird, zum Erzeugen von Warmwasser eingesetzt werden. Hierdurch ist die Effizienz des Systems erhöht. Der Warmwasserspeicher 84 ist mit einer Speicherwand 85 umgeben. In dem Bereich zwischen dem Warmwasserspeicher 84 und der Speicherwand 85 kann mittels einer Pumpe 87 der Druck eingestellt werden. Hierdurch kann eine Wärmeabgabe aus dem Warmwasserspeicher 84 gesteuert werden. Es kann vorgesehen sein, dass beim Überschreiten einer vorbestimmten Temperatur (z.B. 90 °C) der Druck in dem Bereich gesenkt wird, um die Wärmeabgabe zu erhöhen. In diesem Fall dient die Druckregulierung als ein "Überhitzungsschutz".

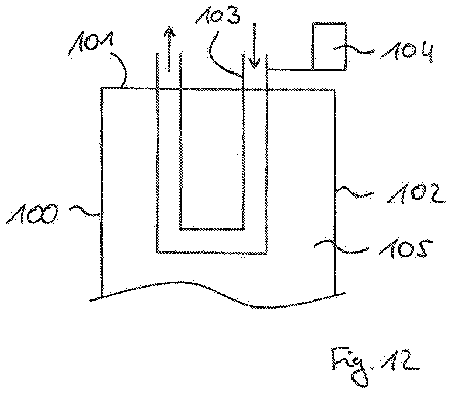

Fig. 12 zeigt eine schematische Darstellung eines Ausschnitts aus einem Wärmespeicher mit einer Außenwand 100, einer oberen Abdeckung 101 und einer WärmespeichermedilJrngrenze 102. Wenn ein festes Wärmespeichermedium verwendet wird, entspricht die Wärmespeichermediumgrenze 102 der äußeren Fläche des festen Wärmespeichermediums. Falls ein flüssiges Wärmespeichermedium eingesetzt wird, umgibt die Wärmespeichermediumgrenze 102 das flüssige Wärmespeichermedium in Form einer Innenwand. Ein Zwischenbereich 105 zwischen der Außenwand 100 und der Wärmespeichermediumgrenze 102 ist teilweise oder vollständig mit einem gasförmigen Medium gefüllt. Ein Hohlkörper 103 ist in einem Bereich der oberen Abdeckung 101 in den Zwischenbereich 105 geführt. In einem anderen Bereich der oberen Abdeckung ist der Hohlkörper aus dem Zwischenbereich 105 heraus geführt. Der Hohlkörper 103 ist teilweise oder vollständig mit einem Arbeitsmedium gefüllt, das mittels einer Pumpe 104 durch den Hohlkörper transportiert werden kann. Das Arbeitsmedium kann in dem Zwischenbereich 105 Wärmeenergie aufnehmen und aus dem Wärmespeicher abführen. Als Arbeitsmedium kann Wasser, Alkohol oder flüssiges Natrium eingesetzt werden.

Die in der vorstehenden Beschreibung, den Ansprüchen und den Figuren offenbarten Merkmale können sowohl einzeln als auch in beliebiger Kombination miteinander für die Verwirklichung von Ausführungsformen relevant sein.

## Patentansprüche

1. Vorrichtung zum Speichern von Energie aufweisend:
- einen Wärmespeicher, der einen Speicherbereich und eine den Speicherbereich umgebende Außenwand (2) aufweist, und
- ein Wärmetransportelement (9; 51; 52),
wobei
- der Speicherbereich ein Wärmespeichermedium (1) aufweist,
- ein Zwischenbereich (3) zwischen dem Speicherbereich und der Außenwand (2) zumindest teilweise mit einem gasförmigen Medium gefüllt ist,
- der Zwischenbereich (3) mit einer ersten Pumpeinrichtung (4) gekoppelt ist, derart, dass ein Druck des gasförmigen Mediums regelbar ist,
- das Wärmetransportelement (9; 51; 52)
- zumindest teilweise mit einem Arbeitsmedium gefüllt ist,
- zumindest abschnittsweise in dem Zwischenbereich (3) angeordnet ist,
- zumindest abschnittsweise in dem Speicherbereich angeordnet ist und / oder
- zumindest abschnittsweise an einer dem Zwischenbereich (3) zugewandten Oberfläche des Speicherbereichs angeordnet ist, und
- ein erster Abschnitt des Wärmetransportelements (9; 51; 52) in dem Zwischenbereich (3) angeordnet ist, derart, dass das Arbeitsmedium in dem Wärmetransportelement (9; 51; 52) in dem ersten Abschnitt mittels von dem Wärmespeichermedium (1) abgegebener Wärme erwärmbar ist, und ein zweiter Abschnitt des Wärmetransportelements (9; 51; 52) außerhalb der Außenwand (2) angeordnet ist, derart, dass das Arbeitsmedium in dem zweiten Abschnitt abkühlt.

2. Vorrichtung nach Anspruch 1, wobei das Wärmetransportelement (9; 51; 52) als Hohlkörper gebildet ist und wobei der Hohlkörper mit einer zweiten Pumpeinrichtung verbunden ist, derart, dass das Arbeitsmedium mittels der zweiten Pumpeinrichtung durch den Hohlkörper transportiert werden kann.

3. Vorrichtung nach Anspruch 1, wobei das Wärmetransportelement (9; 51; 52) als Wärmerohr ausgeführt ist.

4. Vorrichtung nach einem der vorangehenden Ansprüche, wobei das Wärmetransportelement (51; 52) an einer Platte (50; 62) gebildet ist, wobei die Platte (50; 62)
- zumindest abschnittsweise in dem Zwischenbereich (3) angeordnet ist und / oder
- zumindest abschnittsweise in dem Speicherbereich angeordnet ist und / oder
- zumindest abschnittsweise an der dem Zwischenbereich (3) zugewandten Oberfläche des Speicherbereichs angeordnet ist.

5. Vorrichtung nach Anspruch 4, wobei mehrere Wärmetransportelemente (51, 52) an der Platte (50; 62) gebildet sind, wobei die mehreren Wärmetransportelemente (51, 52)
- zumindest abschnittsweise in dem Zwischenbereich (3) angeordnet sind und / oder
- zumindest abschnittsweise in dem Speicherbereich angeordnet sind und / oder
- zumindest abschnittsweise an der dem Zwischenbereich (3) zugewandten Oberfläche des Speicherbereichs angeordnet sind.

6. Vorrichtung nach Anspruch 4 oder 5, wobei die Platte (50; 62) den Speicherbereich vollständig umgibt.

7. Vorrichtung nach einem der Ansprüche 4 bis 6, weiterhin eine weitere Platte (65) aufweisend, wobei die weitere Platte (65) in dem Zwischenbereich (3) zwischen der Platte (62) und dem Speicherbereich angeordnet ist und wobei an der weiteren Platte (65) ein oder mehrere weitere Wärmetransportelemente gebildet sind.

8. Vorrichtung nach einem der Ansprüche 3 bis 7, soweit auf Anspruch 3 rückbezogen, wobei das eine oder die mehreren Wärmerohre und / oder das eine weitere oder die mehreren weiteren Wärmerohre mit einer dritten Pumpeinrichtung verbunden sind, die konfiguriert ist, einen Druck in dem einen oder mehreren Wärmerohren bzw. in dem einen oder mehreren weiteren Wärmerohren einzustellen.

9. Vorrichtung nach einem der vorangehenden Ansprüche, wobei der Zwischenbereich (3) zumindest teilweise mit einem Stützmaterial gefüllt ist.

10. System zum Speichern von Energie, aufweisend:
- einen Wärmespeicher, der einen Speicherbereich und eine den Speicherbereich umgebende Außenwand (2) aufweist, wobei
- der Speicherbereich ein Wärmespeichermedium (1) aufweist,
- ein Zwischenbereich (3) zwischen dem Speicherbereich und der Außenwand (2) zumindest teilweise mit einem gasförmigen Medium gefüllt ist,
- der Zwischenbereich (3) mit einer ersten Pumpeinrichtung (4) gekoppelt ist, derart, dass ein Druck des gasförmigen Mediums regelbar ist,
- ein Wärmetransportelemente (9; 51; 52), das
- zumindest teilweise mit einem Arbeitsmedium gefüllt ist,
- zumindest abschnittsweise in dem Zwischenbereich (3) angeordnet ist,
- zumindest abschnittsweise in dem Speicherbereich angeordnet ist und / oder
- zumindest abschnittsweise an einer dem Zwischenbereich (3) zugewandten Oberfläche des Speicherbereichs angeordnet ist,
wobei ein erster Abschnitt des Wärmetransportelements (9; 51; 52) in dem Zwischenbereich (3) angeordnet ist, derart, dass das Arbeitsmedium in dem Wärmetransportelement (9; 51; 52) in dem ersten Abschnitt mittels von dem Wärmespeichermedium (1) abgegebener Wärme erwärmbar ist, und ein zweiter Abschnitt des Wärmetransportelements (9; 51; 52) außerhalb der Außenwand (2) angeordnet ist, derart, dass das Arbeitsmedium in dem zweiten Abschnitt abkühlt, und
- einen Speicher, der ein Speichermedium umfasst, und der mit dem Wärmetransportelement (9; 51; 52) gekoppelt ist, derart, dass von dem Wärmetransportelement (9; 51; 52) abgegebene Wärme auf das Speichermedium übertragbar ist.

11. System nach Anspruch 10, wobei der Speicher mit einer Hülle umgeben ist, wobei ein zwischen dem Speicher und der Hülle gebildeter Bereich zumindest teilweise mit einem weiteren gasförmigen Medium gefüllt ist, wobei der Bereich mit einer vierten Pumpeinrichtung verbunden ist, wobei eine Steuereinrichtung der vierten Pumpeinrichtung konfiguriert ist, bei Überschreiten einer vorbestimmten Temperatur des Speichermediums einen Druck in dem Bereich zu verändern, um eine Wärmeabgabe zu ermöglichen.

## Claims

1. A device for storing energy, having:
- a heat storage device, which has a storage region and an outer wall (2) surrounding the storage region, and
- a heat transfer element (9; 51; 52),
wherein
- the storage region has a heat storage medium (1),
- an intermediate region (3) between the storage region and the outer wall (2) is filled at least partially with a gaseous medium,
- the intermediate region (3) is coupled with a first pumping device (4) in such a manner that a pressure of the gaseous medium is adjustable,
- the heat transfer element (9; 51; 52)
- is filled at least partially with a working medium,
- at least in certain sections is arranged in the intermediate region (3),
- at least in certain sections is arranged in the storage region, and/or
- at least in certain sections is arranged on a surface of the storage region facing the intermediate region (3), and
- a first section of the heat transfer element (9; 51; 52) is arranged in the intermediate region (3) in such a manner that the working medium in the heat transfer element (9; 51; 52) in the first section can be heated by means of heat output by the heat storage medium (1) and a second section of the heat transfer element (9; 51; 52) is arranged outside the outer wall (2) in such a manner that the working medium in the second section cools.

2. The device according to Claim 1, wherein the heat transfer element (9; 51; 52) is formed as a hollow body and wherein the hollow body is connected to a second pumping device in such a manner that the working medium can be transported through the hollow body by means of the second pumping device.

3. The device according to Claim 1, wherein the heat transfer element (9; 51; 52) is realized as a heat pipe.

4. The device according to one of the preceding claims, wherein the heat transfer element (51; 52) is formed on a plate (50; 62), wherein the plate (50; 62)
- at least in certain sections is arranged in the intermediate region (3), and/or
- at least in certain sections is arranged in the storage region, and/or
- at least in certain sections is arranged on the surface of the storage region facing the intermediate region (3).

5. The device according to Claim 4, wherein a plurality of heat transfer elements (51, 52) are formed on the plate (50; 62), wherein the plurality of heat transfer elements (51, 52)
- at least in certain sections are arranged in the intermediate region (3), and/or
- at least in certain sections are arranged in the storage region, and/or
- at least in certain sections are arranged on the surface of the storage region facing the intermediate region (3).

6. The device according to Claim 4 or 5, wherein the plate (50; 62) surrounds the storage region completely.

7. The device according to one of Claims 4 to 6, furthermore having a further plate (65), wherein the further plate (65) is arranged in the intermediate region (3) between the plate (62) and the storage region, and wherein one or more further heat transfer elements are formed on the further plate (65).

8. The device according to one of Claims 3 to 7, where dependent on Claim 3, wherein the one or the plurality of heat pipe(s) and/or the one further or the plurality of further heat pipe(s) are connected to a third pumping device, which is configured to set a pressure in the one or the plurality of heat pipe(s) or in the one or the plurality of further heat pipe(s).

9. The device according to one of the preceding claims, wherein the intermediate region (3) is at least partially filled with a support material.

10. A system for storing energy, having:
- a heat storage device, which has a storage region and an outer wall (2) surrounding the storage region, wherein
- the storage region has a heat storage medium (1),
- an intermediate region (3) between the storage region and the outer wall (2) is filled at least partially with a gaseous medium,
- the intermediate region (3) is coupled with a first pumping device (4) in such a manner that a pressure of the gaseous medium is adjustable,
- a heat transfer element (9; 51; 52), which
- is filled at least partially with a working medium,
- at least in certain sections is arranged in the intermediate region (3),
- at least in certain sections is arranged in the storage region, and/or
- at least in certain sections is arranged on a surface of the storage region facing the intermediate region (3),
wherein a first section of the heat transfer element (9; 51; 52) is arranged in the intermediate region (3) in such a manner that the working medium in the heat transfer element (9; 51; 52) in the first section can be heated by means of heat output by the heat storage medium (1) and a second section of the heat transfer element (9; 51; 52) is arranged outside the outer wall (2) in such a manner that the working medium in the second section cools, and
- a storage device, which comprises a storage medium, and which is coupled with the heat transfer element (9; 51; 52) in such a manner that heat output by the heat transfer element (9; 51; 52) can be transferred to the storage medium.

11. The system according to Claim 10, wherein the storage device is surrounded with an envelope, wherein a region formed between the storage device and the envelope is at least partially filled with a further gaseous medium, wherein the region is connected to a fourth pumping device, wherein a control device of the fourth pumping device is configured to change a pressure in the region when a predetermined temperature of the storage medium is exceeded, in order to enable heat output.

## Revendications

1. Dispositif, destiné à accumuler de l'énergie, comportant :
- un accumulateur de chaleur, qui comporte une zone d'accumulation et une paroi extérieure (2) entourant la zone d'accumulation,
- un élément de transport thermique (9 ; 51 ; 52),
- la zone d'accumulation comportant un fluide accumulateur de chaleur (1),
- une zone intermédiaire (3) entre la zone d'accumulation et la paroi extérieure (2) étant remplie au moins partiellement d'un fluide gazeux,
- la zone intermédiaire (3) étant couplée avec un premier dispositif de pompage (4), de telle sorte qu'une pression du fluide gazeux soit régulable,
- l'élément de transport thermique (9 ; 51 ; 52)
- étant rempli au moins partiellement d'un fluide de travail,
- étant placé au moins par endroits dans la zone intermédiaire (3),
- étant placé au moins par endroits dans la zone d'accumulation et / ou
- étant placé au moins par endroits sur une surface faisant face à la zone intermédiaire (3) de la zone d'accumulation, et
- un premier segment de l'élément de transport thermique (9 ; 51 ; 52) étant placé dans la zone intermédiaire (3), de telle sorte que le fluide de travail puisse être chauffé dans l'élément de transport thermique (9 ; 51 ; 52) dans le premier segment, au moyen de chaleur restituée par le fluide accumulateur de chaleur (1), et un deuxième segment de l'élément de transport thermique (9 ; 51 ; 52) étant placé à l'extérieur de la paroi extérieure (2), de telle sorte que le fluide de travail refroidisse dans le deuxième segment.

2. Dispositif selon la revendication 1, l'élément de transport thermique (9 ; 51 ; 52) étant constitué sous la forme d'un corps creux et le corps creux étant connecté sur un deuxième dispositif de pompage, de telle sorte que le fluide de travail puisse être transporté au moyen du deuxième dispositif de pompage à travers le corps creux.

3. Dispositif selon la revendication 1, l'élément de transport thermique (9 ; 51 ; 52) étant réalisé sous la forme d'un tube caloporteur.

4. Dispositif selon l'une quelconque des revendications précédentes, l'élément de transport thermique (51 ; 52) étant constitué sur une plaque (50 ; 62), la plaque (50 ; 62)
- étant placée au moins par endroits dans la zone intermédiaire (3) et / ou
- étant placée au moins par endroits dans la zone d'accumulation et/ ou
- étant placée au moins par endroits sur la surface qui fait face à la zone intermédiaire (3) de la zone d'accumulation.

5. Dispositif selon la revendication 4, plusieurs éléments de transport thermique (51, 52) étant constitués sur la plaque (50 ; 62), les plusieurs éléments de transport thermique (51, 52)
- étant placés au moins par endroits dans la zone intermédiaire (3) et / ou
- étant placés au moins par endroits dans la zone d'accumulation et/ ou
- étant placés au moins par endroits sur la surface qui fait face à la zone intermédiaire (3) de la zone d'accumulation.

6. Dispositif selon la revendication 4 ou 5, la plaque (50 ; 62) entourant totalement la zone d'accumulation.

7. Dispositif selon l'une quelconque des revendications 4 à 6, comportant par ailleurs une plaque (65) supplémentaire, la plaque (65) supplémentaire étant placée dans la zone intermédiaire (3) entre la plaque (62) et la zone d'accumulation et sur la plaque (65) supplémentaire étant créé(s) un ou plusieurs éléments de transport thermique supplémentaires.

8. Dispositif selon l'une quelconque des revendications 3 à 7, s'ils se réfèrent à la revendication 3, l'un ou les plusieurs tubes caloporteurs et / ou l'un ou les plusieurs tube(s) caloporteur(s) supplémentaires étant connecté(s) sur un troisième dispositif de pompage, qui est configuré pour régler une pression dans l'un ou les plusieurs tube(s) caloporteur(s) ou dans l'un ou les plusieurs tube(s) caloporteur(s) supplémentaire(s).

9. Dispositif selon l'une quelconque des revendications précédentes, la zone intermédiaire (3) étant remplie au moins partiellement d'un matériau de support.

10. Système destiné à accumuler de l'énergie, comportant :
- un accumulateur de chaleur, qui comporte une zone d'accumulation et une paroi extérieure (2) entourant la zone d'accumulation,
- la zone d'accumulation comportant un fluide accumulateur de chaleur (1),
- une zone intermédiaire (3) entre la zone d'accumulation et la paroi extérieure (2) étant remplie au moins partiellement d'un fluide gazeux,
- la zone intermédiaire (3) étant couplée avec un premier dispositif de pompage (4), de telle sorte qu'une pression du fluide gazeux soit régulable,
- un élément de transport thermique (9 ; 51 ; 52), qui
- est rempli au moins partiellement d'un fluide de travail,
- est placé au moins par endroits dans la zone intermédiaire (3),
- est placé au moins par endroits dans la zone d'accumulation et/ ou
- est placé au moins par endroits sur une surface qui fait face à la zone intermédiaire (3) de la zone d'accumulation,
un premier segment de l'élément de transport thermique (9 ; 51 ; 52) étant placé dans la zone intermédiaire (3), de telle sorte que le fluide de travail puisse être chauffé dans l'élément de transport thermique (9 ; 51 ; 52) dans le premier segment, au moyen de chaleur restituée par le fluide accumulateur de chaleur (1), et un deuxième segment de l'élément de transport thermique (9 ; 51 ; 52) étant placé à l'extérieur de la paroi extérieure (2), de telle sorte que le fluide de travail refroidisse dans le deuxième segment, et
- un accumulateur, qui comprend un fluide accumulateur, et qui est couplé avec l'élément de transport thermique (9 ; 51 ; 52), de telle sorte que de la chaleur restituée par l'élément de transport thermique (9 ; 51 ; 52) soit transmissible au fluide accumulateur.

11. Système selon la revendication 10, l'accumulateur étant entouré d'une gaine, une zone constituée entre l'accumulateur et la gaine étant remplie au moins partiellement d'un fluide gazeux supplémentaire, la zone étant connectée sur un quatrième dispositif de pompage, un système de commande du quatrième dispositif de pompage étant configuré pour faire varier une pression dans la zone, pour permettre une restitution de chaleur, lors d'un dépassement d'une température prédéfinie du fluide accumulateur.
